# EUROPEAN PATENT SPECIFICATION

(11) **EP 2 939 927 B1**
(45) Date of publication and mention of the grant of the patent: **13.12.2017**
(21) Application number: 15166128.7
(22) Date of filing: 01.05.2015
(51) Int. Cl.: B64D 13/06, F02C 6/08

(54) **AIRCRAFT WITH ENVIRONMENTAL CONDITIONING SYSTEM, AND METHOD**
FLUGZEUG MIT UMGEBUNGSKONDITIONIERUNGSSYSTEM, UND VERFAHREN
AÉRONEF COMPRENANT UN SYSTÈME DE CONDITIONNEMENT DE L'ENVIRONNEMENT, ET PROCÉDÉ

(30) Priority: 02.05.2014 US 201461988031 P; 06.02.2015 US 201514616129
(43) Date of publication of application: 04.11.2015
(73) Proprietor: Hamilton Sundstrand Corporation, Windsor Locks, CT 06096-1010 (US)
(72) Inventor: Lukens, William H., Windsor, CT 06095 (US); Rog, Lynn M., South Windsor, CT 06074 (US); D'Orlando, Paul M., Simsbury, CT 06070 (US); Devita, Francesco A., West Suffield, CT 06093 (US); Gatzuras, John T., Weatogue, CT 06089 (US); Hoyt, William D., Ellington, CT 06029 (US)
(74) Representative: Leckey, David Herbert

(56) References cited:
- WO-A1-98/27389
- US-A- 4 430 867
- US-A1- 2003 042 362
- US-A1- 2004 231 350

## Description

### BACKGROUND OF THE INVENTION

This invention relates to environmental air conditioning systems (ECS), and more specifically to air cycle environmental air conditioning systems such as used on aircraft.

Aircraft that fly at altitudes above that at which ambient air is suitable for crew, passengers, cargo, or equipment are often equipped with air cycle environmental air conditioning systems to provide pressurized conditioned air. These air conditioning systems typically utilize a pressurized air bleed from a turbine fan engine or an auxiliary power unit (APU), or in some cases from an electrically-powered compressor as a source of compressed air that flows along an airflow path through the air cycle environmental air conditioning system to produce conditioned air for the cockpit and passenger cabin or other pressurized areas of the aircraft. The compressed air that is fed into these systems is typically at a temperature and pressure far in excess of the normal temperature and pressure for conditioned air to be supplied to the cockpit and passenger cabin, so it must be expanded and cooled by the air conditioning system before it can be discharged as conditioned air. Aviation air cycle environmental conditioning systems typically process the bleed air through multiple cycles of cooling/pressure reduction and compression/heating. Cooling and pressure reduction is accomplished with heat exchangers (including condensers) and with turbines (which also extract work from the bleed air), while compression/heating is accomplished with compressors and reheaters. Many systems include at least one heat exchanger that utilizes external air to cool the bleed air, with a heat exchanger fan commonly included for augmenting external flow in conditions when ram inlet flow is not available.

Air cycle-based aviation ECS systems are required to operate under a variety of conditions. Some of these conditions can involve exposure to airborne particulates, which can result in the accumulation of particulate debris on and around the heat absorption side of heat exchangers that use external air to absorb heat from the bleed air. Continued accumulation of such debris can ultimately lead to partial to complete or near-complete airflow blockage on the heat absorption side of the heat exchanger, which can result in reduced cooling performance, heat exchanger fan problems such as fan surge, broken fan blades, and system failure. Fan blade breakage can also involve failed journal bearings, turbine rotor rubs, and smoke events in the cabin. Other ECS components, including but not limited to turbines and compressors and their associated components, are also subject to wear and component breakage, which can also result in smoke events in the cabin. Smoke in cabin events are quite disruptive to flight operations, and can result in a disturbance to passengers, deployment of emergency equipment, and potential re-routing of flights.

US 4 430 867 discloses an aircraft in accordance with the pre-characterising portion of claim 1.

US 2003/042362 discloses a method of remediating fan source production of smoke in an aircraft cabin.

### BRIEF DESCRIPTION OF THE INVENTION

According to the invention, there is provided an aircraft as set forth in claim 1.

The invention also extends to a method of operating an aircraft environmental conditioning system as set forth in claim 10.

### BRIEF DESCRIPTION OF THE DRAWINGS

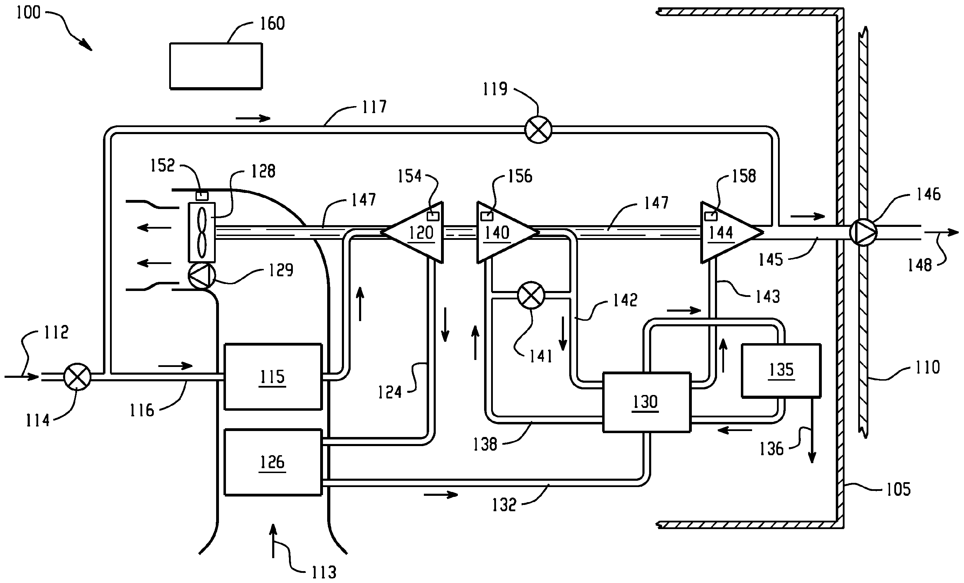

The subject matter which is regarded as the invention is particularly pointed out and distinctly claimed in the claims at the conclusion of the specification. The foregoing and other features, and advantages of the invention are apparent from the following detailed description taken in conjunction with the accompanying Figure, which is a schematic representation of an aircraft environmental conditioning system.

### DETAILED DESCRIPTION OF THE INVENTION

With reference to the Figure, the Figure schematically depicts an exemplary environmental air conditioning system 100 for an aircraft. The environmental air conditioning system 100 is inside housing 105 (only a portion of housing 105 is shown) disposed in an unpressurized area of an aircraft, separated from a pressurized area by bulkhead 110. As shown in the Figure, compressed air 112 from a compressed air source (not shown) such as a turbine engine bleed, an APU bleed, or an electrically-powered compressor is delivered through control valve 114 and conduit 116 to heat exchanger 115 (also referred to in the art as a primary heat exchanger) where it rejects heat to ambient air flowing through or across a heat absorption side of heat exchanger 115. Cooled compressed air is discharged from heat exchanger 115 to compressor 120. A portion of the air going to heat exchanger 115 can be controllably diverted through conduit 117 and control/expansion valve 119 to mix with the outlet of turbine 144 and control the temperature of conditioned air 148. Compressor 120 compresses its portion of the air from the heat exchanger 115, which also results in heating of the air. The further compressed air is discharged from compressor 120 through conduit 124 to heat exchanger 126 (also referred to in the art as a secondary heat exchanger) where it rejects heat to ambient air flowing through or across a heat absorption side of heat exchanger 126.

The ambient air 113 flowing through or across the heat absorption sides of heat exchangers 115 and 126 can be a ram air flow from a forward-facing surface of the aircraft. In conditions under which insufficient airflow is generated by the forward motion of the aircraft for operation of the heat exchangers 115, 126, the air flow can be assisted by operation of fan 128. Check/bypass valve 129 allows for bypass of the fan 128 when ram air flow is sufficient for the needs of the heat exchangers 115 and 126. Heat exchangers 115, 126 can share a flow path for the ambient cooling air, and can be integrated into a single unit with heat exchanger 115 sometimes referred to as a primary heat exchanger and heat exchanger 126 sometimes referred to as a secondary heat exchanger. Cooled air discharged from heat exchanger 126 is delivered through conduit 132 to a heat rejection side of heat exchanger 130. In the heat rejection side of heat exchanger 130, the air is further cooled to a temperature at or below the dew point of the air and flows into water removal unit 135 where liquid water 136 condensed from the air is removed. The dehumidified air flows through a heat absorption side of heat exchanger 130 where it is re-heated before being delivered through conduit 138 to turbine 140, where work is extracted as the air is expanded and cooled by turbine 140. A portion of the air going to turbine 140 can be diverted by valve 141 if needed to allow the temperature of the air at the inlet to the heat absorption side of heat exchanger 130 to be above freezing. The cooled expanded air discharged from the turbine 140 is delivered through conduit 142 to a heat absorption side of heat exchanger 130 where it along with the dehumidified air discharged from water collection unit 135 provides cooling needed to condense water vapor from air on the heat rejection side of heat exchanger 130. The air streams on the heat absorption side of the heat exchanger 130 are thus reheated. Heat exchanger 130 is also sometimes referred to as a condenser/reheater, and can be integrated with water removal unit 135 in a single unit. The reheated air from conduit 142 exiting from the heat absorption side of heat exchanger 130 flows through conduit 143 to turbine 144, where it is expanded and cooled, and then discharged from the system 100 through conduit 145 as conditioned air 148 to provide conditioned air to a cooling load, for example, the cabin of the aircraft. A check valve 146 at the bulkhead 110 prevents outflow from the pressurized area of the aircraft through the environmental air conditioning system 100 during flight when the system 100 is not being operated.

The environment air conditioning system 100 also includes a power transfer path 147 such as a rotating shaft that transfers power to the compressor 120 and fan 128 from work extracted by turbines 140 and 144. The moving parts associated with the power transfer path 147 as well as the moving parts and any parts that contact moving parts (e.g., bearings, bushings, supports, housings, vanes, blades, etc.) of any or all of the compressor 120, fan 128, or turbines 140 and 144 can be a source or contributing factor to catastrophic system failure that can result in a cabin smoke event. For example, over time the heat absorption side of the heat exchangers 115 and 126 can become clogged with airborne debris from inlet air 113. When this happens, the fan blades of fan 128 are subject to unexpected stress because sufficient air is not provided through the heat exchangers 115, 126 for smooth aerodynamic operation of the fan blades. If the blockage goes undetected, one or more fan blades can break, resulting in a bearing failure that generates smoke that is blown by the air cycle machine into the aircraft cabin.

As shown in the Figure, the environmental conditioning system 100 is equipped with one or more vibration sensors such as any one or more of exemplary vibration sensors 152, 154, 156, or 158. By monitoring vibration or other motion of moving components in the air cycle machine and non-moving components in proximity to such moving components, unexpected or abnormal vibration or other motions can be detected that are indicative of an impending or actual equipment failure. A controller 160 is shown in the Figure, which is in communication (e.g., wireless communication, wired communication, or both wired and wireless communication) with the sensor(s) 152, 154, 156, 158, and can also be in communication with various other system components (e.g., electrical switches, pressure sensors, temperature sensors, flow sensors, control valves, etc.). The controller can be located inside or outside of the housing 105, and can be a local controller networked with other controllers or an aircraft systems controller, or can integrated with the system level controller. As shown in the Figure, each of the vibration sensors 152, 154, 156, and 158 is positioned in contact with or proximate to each of the rotating devices fan 128, compressor 120, turbine 140, or turbine 144, respectively and can therefore provide information to the controller 160 that is specific to identify the device exhibiting problems. The vibration sensors are accelerometers. Because an accelerometer provides a stream of data of the g-forces acting on it, the accelerometer readout can be used to detect not only vibration intensity, but also patterns in vibration or motion of components such as a cavitation pattern for fan 128 indicative of insufficient airflow through the heat absorption side of heat exchangers 115, 126. The accelerometers g-force reading is also utilized to determine the rotational velocity (i.e., rotations per minute) of turbine 140, turbine 144, compressor 120, fan 128, or the power transfer path 147. Rotational velocities outside of a normal range (e.g., 10,000-50,000 rpm) can be indicative of impending or actual equipment failure.

In operation, the specific criteria used by the controller 160 to identify abnormal device operation will vary based on the specifics of the equipment and system design, but can be determined by experimentation with simulated failures. For example, the output of vibration sensor 152 associated with fan 128 can be observed under conditions where the heat absorption side of heat exchangers 115, 126 is purposely blocked to varying degrees, and the observed data can be used to set conditions for the controller 160 to identify anomalous data during operation of the system. Some equipment failure modes can provide detectable vibrational or motion signatures in advance of actual failure (i.e., impending failure) or at the onset of failure (i.e., actual failure), allowing for the provision of an alert to flight crew or maintenance personnel in advance of any equipment failure. For example, a blocked heat exchanger 115, 126 can cause cavitation, the vibrational or motion signature of which can be detected by an accelerometer. Cavitation can lead to fan blade breakage, which can rapidly lead to a smoke-producing bearing failure or equipment overheat. Fan blade breakage can also be detected based on the output characteristics from the vibration sensor 152 as an onset of equipment failure. Another failure mode detectable by vibration sensors is a bearing failure. A vibration sensor attached to or proximate to a bearing housing can detect impending bearing failure through vibration. At the onset of catastrophic smoke-producing equipment failure, a vibration sensor attached to or proximate to a bearing housing can detect a telltale vibration signature.

In some embodiments, a first type of alert of impending equipment failure is made based on a first set of output criteria from the vibration sensor(s), and a second type alert is made at the onset of equipment failure based on a second set of output criteria from the vibration sensor(s). Of course, multiple sets of criteria can be utilized to generate multiple types of alerts. In some exemplary embodiments, the controller 160 can be configured to provide an alert to the flight crew initiate a changeover to a parallel onboard air cycle machine or to descend to an altitude where cabin pressurization is not needed, thus limiting or avoiding equipment damage. Alternatively, the controller can automatically initiate a changeover to a parallel air cycle machine. An alert can also be made to ground maintenance personnel to inspect and service the heat exchanger airflow assembly, replacing any components that show signs of damage or that data collected by controller 160 indicate has been subjected to conditions that could cause undetectable damage to components (e.g., metal fatigue in fan blades). The same control options exist at the failure onset stage (e.g., alerting flight crew, automatically shutting down equipment and starting up a parallel onboard air cycle machine, or leaving an alert or data trail for ground-based maintenance personnel), of course with greater urgency for shutting down equipment. Even at the onset of equipment failure, pro-active detection at the source of the equipment failure can provide a valuable head start for any measures take to prevent smoke from entering the aircraft cabin, compared to the previous approach of waiting until smoke is smelled or observed already in the cabin.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. An aircraft comprising a pressurised area, an unpressurised area and an environmental conditioning system (100), the environmental conditioning system (100) comprising:
a housing (105) in the unpressurized area of the aircraft; and
an air cycle machine disposed in the housing (105) for conditioning an airflow comprising hot compressed air by reducing its temperature and pressure to produce conditioned pressurized air for delivery to the pressurized area of the aircraft, the air cycle machine comprising at least one of a heat exchanger fan (128), a turbine (140,144), or a compressor (120);
characterised'
in that an accelerometer (152,154,156,158) is disposed within the housing (105) and is positioned and configured to sense vibration from and rotational speed of one or more of the heat exchanger fan (128), the compressor (120), or the turbine (140,144); and
by further comprising a controller (160) in communication with the accelerometer (152,154,156,158), and configured to respond to vibration detected by the accelerometer (152,154,156,158).

2. The aircraft of claim 1, wherein the air cycle machine comprises a heat exchanger fan (128), a turbine (140,144), and a compressor (120), and the environmental conditioning system further comprises a separate accelerometer associated with each of the heat exchanger fan (128), the turbine (140,144), and the compressor (120).

3. The aircraft of claims 1 or 2, wherein the air cycle machine comprises a turbine (140,144) and a compressor (120) along an airflow path that outputs the conditioned pressurized air, and a heat exchanger fan (128), and the turbine (140,144) provides power to the compressor (120) or the heat exchanger fan (128) along a rotating shaft (147).

4. The aircraft of any of claims 1 to 3, wherein the controller (160) is configured to generate an alert in response to detection of vibration by the accelerometer (152,154,156,158).

5. The aircraft of claim 4, wherein the controller (160) is further configured to shut down the air cycle machine in response to detection of vibration by the accelerometer (152,154,156,158).

6. The aircraft of claims 4 or 5, wherein the controller (160) is further configured to start operation of a second air cycle machine.

7. The aircraft of any preceding claim, wherein the controller (160) is configured to provide an alert of impending equipment failure based on a first set of output criteria from the accelerometer (152,154,156,158), and to provide a second alert of the onset of equipment failure or shut down the air cycle machine based on a second set of output criteria from the accelerometer (152,154,156,158).

8. The aircraft of any preceding claim, wherein the controller (160) is configured to provide an alert for on-ground servicing of the air cycle machine.

9. A method of operating an aircraft environmental conditioning system (100) for an aircraft comprising a pressurised area and an unpressurised area, the method comprising:
operating an air cycle machine disposed in a housing (105) in the unpressurized area, the air cycle machine comprising at least one of a heat exchanger fan (128), a turbine (140,144), or a compressor (120) to condition hot compressed air by reducing its temperature and pressure to produce conditioned air pressurized air for delivery to the pressurized area of the aircraft;
**characterised by**:
monitoring output of an accelerometer (152,154,156,158) positioned and configured to sense vibration from and rotational speed of one or more of the heat exchanger fan (128), the compressor (120), or the turbine (140,144); and
providing an alert in response to vibration detected by the accelerometer (152,154,156,158).

10. The method of claim 9, further comprising shutting down the air cycle machine in response to vibration detected by the accelerometer (152,154,156,158).

11. The method of claims 9 or 10, further comprising starting operation of a second air cycle machine.

12. The method of claim 9, 10 or 11, further comprising providing an alert of impending equipment failure based on a first set of output criteria from the accelerometer (152,154,156,158), and providing a second alert of the onset of equipment failure or shut down the air cycle machine based on a second set of output criteria from the accelerometer (152,154,156,158).

## Patentansprüche

1. Flugzeug, das einen unter Druck stehenden Bereich, einen nicht unter Druck stehenden Bereich und ein Umgebungskonditionierungssystem (100) umfasst, wobei das Umgebungskonditionierungssystem (100) Folgendes umfasst:
ein Gehäuse (105) in dem nicht unter Druck stehenden Bereich des Flugzeugs; und
eine Kühlturbine, die in dem Gehäuse (105) angeordnet ist, zur Klimatisierung eines Luftstroms, der heiße Druckluft umfasst, durch Reduzierung seiner Temperatur und seines Drucks, um konditionierte Druckluft für die Abgabe an den unter Druck stehenden Bereich des Flugzeugs zu erzeugen, wobei die Kühlturbine mindestens ein Wärmetauscher-Gebläse (128), eine Turbine (140, 144) oder einen Kompressor (120) umfasst;
**dadurch gekennzeichnet, dass**
ein Beschleunigungsmesser (152, 154, 156, 158) in dem Gehäuse (105) angeordnet ist und dazu ausgerichtet und konfiguriert ist, die Vibration und die Umlaufgeschwindigkeit des Wärmetauscher-Gebläses (128) und/oder des Kompressors (120) und/oder der Turbine (140, 144) zu erfassen; und
es ferner ein Steuerelement (160) umfasst, das in Verbindung mit dem Beschleunigungsmesser (152, 154, 156, 158) steht und dazu konfiguriert ist, auf die von dem Beschleunigungsmesser (152, 154, 156, 158) erfasste Vibration zu reagieren.

2. Flugzeug nach Anspruch 1, wobei die Kühlturbine ein Wärmetauscher-Gebläse (128), eine Turbine (140, 144) und einen Kompressor (120) umfasst und das Umgebungskonditionierungssystem ferner jeweils einen separaten Beschleunigungsmesser für das Wärmetauscher-Gebläse (128), die Turbine (140, 144) und den Kompressor (120) umfasst.

3. Flugzeug nach Anspruch 1 oder 2, wobei die Kühlturbine eine Turbine (140, 144) und einen Kompressor (120) entlang des Luftstrompfads, der die klimatisierte Druckluft abgibt, und ein Wärmetauscher-Gebläse (128) umfasst und die Turbine (140, 144) Energie für den Kompressor (120) oder das Wärmetauscher-Gebläse (128) entlang einer Drehwelle (147) liefert.

4. Flugzeug nach einem der Ansprüche 1 bis 3, wobei das Steuerelement (160) dazu konfiguriert ist, eine Warnmeldung in Reaktion auf die Erfassung von Vibration durch den Beschleunigungsmesser (152, 154, 156, 158) zu erzeugen.

5. Flugzeug nach Anspruch 4, wobei das Steuerelement (160) ferner dazu konfiguriert ist, die Kühlturbine in Reaktion auf die Erfassung von Vibration durch den Beschleunigungsmesser (152, 154, 156, 158) abzuschalten.

6. Flugzeug nach Anspruch 4 oder 5, wobei das Steuerelement (160) ferner dazu konfiguriert ist, eine zweite Kühlturbine in Betrieb zu setzen.

7. Flugzeug nach einem der vorhergehenden Ansprüche, wobei das Steuerelement (160) dazu konfiguriert ist, aufgrund eines ersten Satzes von Ausgabekriterien aus dem Beschleunigungsmesser (152, 154, 156, 158) eine Warnmeldung über eine drohende Gerätestörung zu liefern und aufgrund eines zweiten Satzes von Ausgabekriterien aus dem Beschleunigungsmesser (152, 154, 156, 158) eine zweite Warnmeldung über das Einsetzen einer Gerätestörung zu liefern oder die Kühlturbine abzuschalten.

8. Flugzeug nach einem der vorhergehenden Ansprüche, wobei das Steuerelement (160) dazu konfiguriert ist, eine Warnmeldung für die Wartung der Kühlturbine am Boden zu liefern.

9. Verfahren für das Betreiben eines Flugzeug-Umgebungskonditionierungssystems (100) für ein Flugzeug, das einen unter Druck stehenden Bereich und einen nicht unter Druck stehenden Bereich umfasst, wobei das Verfahren Folgendes umfasst:
Betreiben einer Kühlturbine, die in einem Gehäuse (105) im nicht unter Druck stehenden Bereich angeordnet ist, wobei die Kühlturbine mindestens ein Wärmetauscher-Gebläse (128), eine Turbine (140, 144) oder einen Kompressor (120) zur Konditionierung von heißer Druckluft durch Reduzierung ihrer Temperatur und ihres Drucks, um konditionierte Druckluft zur Abgabe an den unter Druck stehenden Bereich des Flugzeugs zu erzeugen, umfasst;
**gekennzeichnet durch**:
Überwachen der Ausgabe eines Beschleunigungsmessers (152, 154, 156, 158), der dazu ausgerichtet und konfiguriert ist, die Vibration und die Umlaufgeschwindigkeit des Wärmetauscher-Gebläses (128) und/oder des Kompressors (120) und/oder der Turbine (140, 144) zu erfassen; und
Erzeugen einer Warnmeldung in Reaktion auf die durch den Beschleunigungsmesser (152, 154, 156, 158) erfasste Vibration.

10. Verfahren nach Anspruch 9, das ferner das Abschalten der Kühlturbine in Reaktion auf die durch den Beschleunigungsmesser (152, 154, 156, 158) erfasste Vibration umfasst.

11. Verfahren nach Anspruch 9 oder 10, das ferner das Inbetriebsetzen einer zweiten Kühlturbine umfasst.

12. Verfahren nach Anspruch 9, 10 oder 11, das ferner das Erzeugen einer Warnmeldung über eine drohende Gerätestörung aufgrund eines ersten Satzes von Ausgabekriterien aus dem Beschleunigungsmesser (152, 154, 156, 158) und das Erzeugen einer zweiten Warnmeldung über das Einsetzen einer Gerätestörung oder die Abschaltung der Kühlturbine aufgrund eines zweiten Satzes von Ausgabekriterien aus dem Beschleunigungsmesser (152, 154, 156, 158) umfasst.

## Revendications

1. Aéronef comprenant une zone pressurisée, une zone non pressurisée et un système de conditionnement de l'environnement (100), le système de conditionnement de l'environnement (100) comprenant :
un boîtier (105) dans la zone non pressurisée de l'aéronef ; et
un turborefroidisseur disposé dans le boîtier (105) pour le conditionnement d'un flux d'air comprenant de l'air compressé chaud en réduisant sa température et sa pression pour produire un air pressurisé conditionné à fournir à la zone pressurisée de l'aéronef, le turborefroidisseur comprenant au moins un ventilateur d'échangeur de chaleur (128), une turbine (140, 144) ou un compresseur (120) ;
**caractérisé en ce**
**qu'**un accéléromètre (152, 154, 156, 158) est disposé à l'intérieur du boîtier (105) et est positionné et configuré pour détecter des vibrations provenant de et la vitesse de rotation d'un ou de plusieurs éléments parmi le ventilateur d'échangeur de chaleur (128), le compresseur (120) ou la turbine (140, 144) ; et
en comprenant en outre un contrôleur (160) en communication avec l'accéléromètre (152, 154, 156, 158) et configuré pour répondre aux vibrations détectées par l'accéléromètre (152, 154, 156, 158).

2. Aéronef selon la revendication 1, dans lequel le turborefroidisseur comprend un ventilateur d'échangeur de chaleur (128), une turbine (140, 144) et un compresseur (120), et le système de conditionnement de l'environnement comprend en outre un accéléromètre séparé associé à chacun des éléments parmi le ventilateur d'échangeur de chaleur (128), la turbine (140, 144) et le compresseur (120).

3. Aéronef selon les revendications 1 ou 2, dans lequel le turborefroidisseur comprend une turbine (140, 144) et un compresseur (120) le long d'un trajet de flux d'air qui sort de l'air pressurisé conditionné, et un ventilateur d'échangeur de chaleur (128), et la turbine (140, 144) fournit de la puissance au compresseur (120) ou au ventilateur d'échangeur de chaleur (128) le long d'un arbre de rotation (147).

4. Aéronef selon l'une quelconque des revendications 1 à 3, dans lequel le contrôleur (160) est configuré pour générer une alerte en réponse à la détection de vibrations par l'accéléromètre (152, 154, 156, 158).

5. Aéronef selon la revendication 4, dans lequel le contrôleur (160) est configuré en outre pour désactiver le turborefroidisseur en réponse à la détection de vibrations par l'accéléromètre (152, 154, 156, 158).

6. Aéronef selon les revendications 4 ou 5, dans lequel le contrôleur (160) est configuré en outre pour démarrer le fonctionnement d'un deuxième turborefroidisseur.

7. Aéronef selon une quelconque revendication précédente, dans lequel le contrôleur (160) est configuré pour fournir une alerte de panne d'équipement imminente sur la base d'un premier ensemble de critères de sortie provenant de l'accéléromètre (152, 154, 156, 158) et pour fournir une deuxième alerte à l'apparition d'une panne d'équipement ou pour désactiver le turborefroidisseur sur la base d'un deuxième ensemble de critères de sortie provenant de l'accéléromètre (152, 154, 156, 158).

8. Aéronef selon une quelconque revendication précédente, dans lequel le contrôleur (160) est configuré pour fournir une alerte pour une maintenance au sol du turborefroidisseur.

9. Procédé de fonctionnement d'un système de conditionnement de l'environnement d'aéronef (100) pour un aéronef comprenant une zone pressurisée et une zone non pressurisée, le procédé comprenant :
le fonctionnement d'un turborefroidisseur disposé dans un boîtier (105) dans la zone non pressurisée, le turborefroidisseur comprenant au moins un élément parmi un ventilateur d'échangeur de chaleur (128), une turbine (140, 144) ou un compresseur (120) pour conditionner l'air compressé chaud en réduisant sa température et sa pression pour produire un air pressurisé conditionné à fournir à la zone pressurisée de l'aéronef ;
**caractérisé par** :
le suivi des sorties d'un accéléromètre (152, 154, 156, 158) positionné et configuré pour détecter des vibrations provenant de et la vitesse de rotation d'un ou de plusieurs éléments parmi le ventilateur d'échangeur de chaleur (128), le compresseur (120) ou la turbine (140, 144) ; et
la fourniture d'une alerte en réponse aux vibrations détectées par l'accéléromètre (152, 154, 156, 158).

10. Procédé selon la revendication 9, comprenant en outre la désactivation du turborefroidisseur en réponse aux vibrations détectées par l'accéléromètre (152, 154, 156, 158).

11. Procédé selon les revendications 9 ou 10, comprenant en outre le démarrage du fonctionnement d'un deuxième turborefroidisseur.

12. Procédé selon la revendication 9, 10 ou 11, comprenant en outre la fourniture d'une alerte d'une panne d'équipement imminente sur la base d'un premier ensemble de critères de sortie provenant de l'accéléromètre (152, 154, 156, 158) et la fourniture d'une deuxième alerte à l'apparition d'une panne d'équipement ou la désactivation du turborefroidisseur sur la base d'un deuxième ensemble de critères de sortie provenant de l'accéléromètre (152, 154, 156, 158).
